(19) Europäisches Patentamt
European Patent Office
Office européen des brevets

(11) Veröffentlichungsnummer: **0 011 183**
**B1**

(12) **EUROPÄISCHE PATENTSCHRIFT**

(45) Veröffentlichungstag der Patentschrift: **06.05.81**

(21) Anmeldenummer: **79104242.7**

(22) Anmeldetag: **31.10.79**

(51) Int. Cl.³: **C 08 G 8/28**, C 08 G 79/08, B 01 D 1/02

(54) **Verfahren zur Isolierung borhaltiger Phenol-Formaldehydharze.**

(30) Priorität: **11.11.78 DE 2849115**

(43) Veröffentlichungstag der Anmeldung: **28.05.80 Patentblatt 80/11**

(45) Bekanntmachung des Hinweises auf die Patenterteilung: **06.05.81 Patentblatt 81/18**

(84) Benannte Vertragsstaaten: **BE DE FR GB IT NL**

(56) Entgegenhaltungen:
**DE - A - 2 245 812**
**DE - A1 - 2 557 613**

(73) Patentinhaber: **BAYER AG**
**Zentralbereich Patente, Marken und Lizenzen**
**D-5090 Leverkusen 1, Bayerwerk (DE)**

(72) Erfinder: **Schmidt, Manfred, Dr.**
**Bodelschwinghstrasse 20**
**D-4150 Krefeld 1 (DE)**
Erfinder: **Bandtel, Eberhard, Dipl.-Ing.**
**Dahler Dyk 173**
**D-4150 Krefeld (DE)**
Erfinder: **Traudisch, Walter**
**Paul-Klee-Strasse 47**
**D-5090 Leverkusen (DE)**
Erfinder: **Spott, Georg, Dipl.-Ing.**
**Rather Strasse 75**
**D-4150 Krefeld 1 (DE)**
Erfinder: **Freitag, Dieter, Dr.**
**Hasenheide 10**
**D-4150 Krefeld 1 (DE)**

**EP 0 011 183 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Verfahren zur Isolierung borhaltiger Phenol-Formaldehydharze

Die vorliegende Erfindung betrifft ein Verfahren zur Isolierung borhaltiger Phenol-Formaldehydharze aus ihren Reaktionsmedien.

Die DE—OS 2 557 613 beschreibt borhaltige Phenol-Formaldehydharze, die durch partielle Umsetzung eines Novolakes mit Borverbindungen sowie gleichzeitiger oder nachfolgender Umsetzung mit ungesättigten Fettsäuren hergestellt werden können.

Diese Harze können durch folgende Formel wiedergegeben werden:

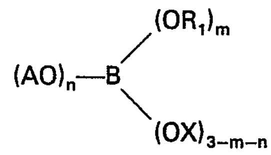

In dieser Formel bedeuten

m, n Werte zwischen 1 und 2 mit der Bedingung $m + n = 2$,

A $C_1$—$C_4$-Alkyl wie Methyl, Äthyl, Propyl, Butyl, Isopropyl, Isobutyl,

$R_1$ A oder X

X ein Novolak, der durch Kondensation eines Aldehyds mit einem Diphenylolalkan oder einem Gemisch aus Diphenylolalkanen und Hydroxyphenyl-hydroxyindan- und Hydroxyphenyl-hydroxychroman-Isomeren in Gegenwart saurer Katalysatoren gebildet wird und der noch freie phenolische OH-Gruppen sowie eine ungesättigte Fettsäure mit bevorzugt $C_{12}$—$C_{36}$ C-Atomen, oder Gemische davon, einkondensiert, enthält.

Die borhaltigen Harze sind in Methanol, Äthanol, Propanol, Isopropanol, Butanol, Isobutanol, Dioxan, Tetrahydrofuran, Aceton, Methyläthylketon, Essigester, Butylacetat, Methyl- und Äthylglykolacetat löslich und weisen eine Jodzahl von 80 bis 200, vorzugsweise von 110 bis 170 und eine OH-Zahl von 200 bis 500, vorzugsweise von 240 bis 450, auf und besitzen einen Borgehalt bis zu 7 Gew.-%, vorzugsweise 1,5 bis 5 Gew.-%. Der Erweichungspunktbereich der Harze liegt zwischen 50 und 150°C, vorzugsweise zwischen 55 und 110°C.

Nach Durchführung der Umsetzung zu den borhaltigen Harzen besteht das Reaktionsmedium aus dem erhaltenen Endprodukt, den eingesetzten Ausgangsverbindungen sowie den verwendeten Lösungsmitteln.

Wie in der DE—OS 2 557 613 näher beschrieben wurde, werden als Novolake Reaktionsprodukte von Diphenylolalkanen, wie sie beispielsweise in der DT—AS 1 235 894 erwähnt werden. Hydroxyphenyl-hydroxyindanen oder deren Gemischen mit Aldehyden als Ausgangsprodukt eingesetzt. Weitere Ausgangsprodukte sind Fettsäure oder deren Ester, Bortrioxid, Borsäure sowie Borsäurealkylester der Formeln:

$B(OR)_3$, $HO—B(OR)_2$, $(HO)_2B—OR$,

$(RO)_2—B—O—B(OR)_2$, 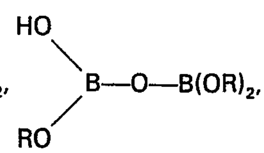

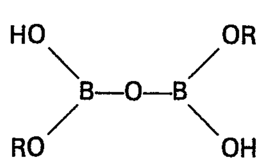 , $(HO)_2B—O—B(OR)_2$,

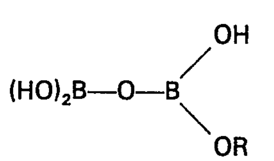 mit $R = C_1—C_4$ Alkyl.

Eine weitere Komponente des Reaktionsmediums besteht aus dem bei der Umsetzung verwendeten Lösungsmittel wie beispielsweise Benzol, Toluol, Xylol, Essigester, Butylacetat, Methylglykol- oder Äthylglykolacetat sowie Alkoholen mit 1—4 C-Atomen.

Die Isolierung der borhaltigen Phenol-Formaldehyd-harze kann sowohl

a) durch Eindampfen der Harzlösung im Reaktionskessel und Ablassen der flüssigen Harzschmelze,
b) durch Eindampfen der Harzlösung vermittels einer Ausdampfschnecke als auch
c) durch Eindampfen der Harzlösung in einem Schlangenrohrverdampfer erfolgen,

wobei alle 3 Aufarbeitungsvarianten für gleichbedeutend gehalten werden.

Die borsäureestermodifizierten Phenol-Formaldehydharze können als Verstärkerharze für Kautschuke eingesetzt werden. Zu diesem Zweck werden sie in Gegenwart einer formaldehydabspaltenden Verbindung wie beispielsweise Hexamethylentetramin, Paraformaldehyd, Trioxi- oder Tetraoximethylen auf den bei der Kautschukverarbeitung üblichen Mischaggregaten wie z.B. Walzwerken, Knetern und Schnellmischern bei erhöhten Temperaturen in Kautschuk eingemischt.

Die wertvollen Eigenschaften der borsäureestermodifizierten Phenol-Formaldehydharze, nämlich ihre hohe temperaturbeständige Härtewirksamkeit in verschiedenen Kautschuken bei gleichzeitiger Erhöhung der Strukturfestigkeit sowie deren universelle Verwendbarkeit in verschiedenen synthetischen Kautschuken wie NBR, SBR, EPDM, BR, CR und NR, werden jedoch nur dann optimal erreicht, wenn es gelingt, einerseits möglichst vollständig das bei der herstellung verwendete Lösungsmittel zu entfernen und andererseits die eingesetzte Borverbindung möglichst quantitativ in den Novolak einzuestern, ohne dessen vorteilhaft hohe Reaktivität durch partiell vernetzende Kondensation infolge zu langer thermischer Belastung zu mindern.

So wurde festgestellt, daß es aufgrund der hohen Reaktivität der trifunktionellen Borsäureesterverbindungen nicht möglich ist, das Harz in einem technischen Ansatz wirtschaftlich sinnvoller Größe durch Eindampfung im Reaktionskessel weitgehend lösungsmittelfrei und unvernetzt zu isolieren. Aufgrund der längeren Destillationszeiten für das Lösungsmittel muß man — um Vernetzung durch zu lange Temperaturbelastung zu vermeiden — vorzeitig das Harz aus dem Reaktionsgefäß isolieren, ohne daß das Lösungsmittel vollständig entfernt werden konnte. Dadurch werden die vorteilhaften Eigenschaften des Harzes nicht optimal erreicht; — man erhält gehärtete Kautschukmaterialien mit weniger hohen Härtewerten. Die so erhaltenen Harze sind nicht genügend lagerstabil. Sie sintern allmählich zusammen, verlieren ihre Konfektionierungsform und verursachen beim Einarbeiten in den Kautschuk aufgrund des Restlösungsmittelgehaltes ein Ankleben der Kautschukmischung auf den Einmischwalzen. Während aus kleineren Reaktionsgefäßen bis 0,2 $m^3$ Inhalt aufgrund der geringeren Temperaturbelastung während der Direkteindampfung das Harz noch lösungsmittelfrei zu isolieren ist, gelingt dies aus größeren technischen Reaktionsgefäßen aus den o.g. Gründen nicht mehr.

Bei der kontinuierlichen Eindampfung der Verstärkerharzlösung in einer Ausdampfschnecke wirtschaftlich sinnvoller Größe (Durchsatz: 80—500 kg/h; Verweilzeit: 15—30 Min.) werden ebenfalls Harze erhalten, die die optimalen Eigenschaften eines nach kurzer thermischer Belastung aus einer kleineren Ausdampfschnecke (Durchsatz: 1—10 kg/h) isolierten Verstärkerharzes nicht erreichen. Will man lösungsmittelfreie Harze nach diesem Verfahren isolieren, so erhält man stets partiell vernetzte Produkte, die nicht vollständig beim Einmischen in den Kautschuk aufschmelzen (Stippenbildung) und sich nicht homogen in der Kautschukmatrix verteilen. Die gehärteten Kautschukmaterialien zeigen demzufolge eine verminderte Härte und geringere Strukturfestigkeit.

Um nach diesem Verfahren unvernetzte homogen in den Kautschuk einmischbare und aufschmelzbare Harze zu erhalten, muß man auf eine vollständige Ausdampfung des Lösungsmittels verzichten. Die so erhaltenen Harze besitzen niedrige Erweichungspunkte (Ep. 40—60°C; nach DIN 53180), verursachen Kleben beim Einmischen in den Kautschuk und liefern gehärtete Kautschuke verminderter Härte. Beim längerem Lagern sintern solche Harze zusammen, so daß sie schlecht technisch zu verarbeiten sind.

Aufgabe der Erfindung war es, ein Verfahren zu finden, das die Isolierung und Endkonfektionierung der Harze aus ihrer Lösung gestattet, wobei die im folgenden aufgezählten Eigenschaften der Harze möglichst optimal erreicht werden sollen:

1. Das Harz soll hohe temperaturstabile Härtewerte der gehärteten Kautschukmaterialien liefern.
2. Die durch Einmischen des Harzes gehärteten Kautschukmaterialien sollen hohe Strukturviskositäten aufweisen.
3. Die Harze sollen bei Verarbeitungstemperaturen von 70 bis 120°C, vorzugsweise von 80 bis 100°C, universell in verschiedene synthetische Kautschuke wie NBR, SBR, EPDM, BR, CR, sowie Naturkautschuk unter Ausbildung gehärteter Kautschukmaterialien der unter 1. und 2. genannten vorteilhaften Eigenschaften einarbeitbar sein.
4. Die Harze sollen innerhalb des genannten Verarbeitungstemperaturbereiches aufschmelzen und sich homogen in der Kautschukmatrix verteilen lassen ohne Kleben an den Einmischwalzen zu verursachen.

Um diese Eigenschaften optimal zu erreichen, mußte eine Aufarbeitungsmethode für die Harzlösung gefunden werden, die eine weitestgehende Einkondensation der zugegebenen Borverbindung in den Novolakgrundkörper des Harzes bewirkt und die weiterhin eine quantitative Entfernung des

Lösungsmittels erlaubt, ohne daß es infolge zu langer thermischer Belastung zu einer bis zur partiellen Vernetzung des Harzes fortschreitenden Kondensationsreaktion kommt.

Aufgabe der Erfindung war es demzufolge, eine Aufarbeitungsmethode zu ermitteln, die gestattet, den Parameter Verweilzeit durch die Parameter Temperatur und Druck so einstellbar zu gestalten, daß die nach dem erfindungsgemäßen Aufarbeitungsverfahren erhaltenen Harze die o.g. signifikanten vorteilhaften Eigenschaften 1. bis 4. aufweisen und daß diese Harze keine ihre positiven Eigenschaften schädigenden Einflüssen während der Aufarbeitung ausgesetzt sind.

Dies konnte durch Eindampfen der Harzlösung in einem gewendelten Reaktions- und Verdampfungsrohr, kurz genannt Schlangenrohr, mit einem bestimmten erfindungsgemäßen Verhältnis von Durchsatz zu Strömungsquerschnitt, im folgenden A genannt, und einem bestimmten erfindungsgemäßen Verhältnis von Durchsatz zu Wärmeübertragungsfläche, im folgenden B genannt, erreicht werden.

Gegenstand der Erfindung ist somit ein Verfahren zur Isolierung von borhaltigen Phenol-Formaldehydharzen aus ihren Reaktionsmedien, welche neben dem Endprodukt noch eingesetzte Ausgangsverbindungen sowie Lösungsmittel enthalten, das dadurch gekennzeichnet ist, daß die Isolierung durch Eindampfung in einem gewendelten Verdampfungsrohr erfolgt, das folgende Kenndaten aufweist:

$$A = \frac{\text{Durchsatz}}{\text{Rohrquerschnitt}} \quad \frac{\text{kg}}{\text{h . mm}^2} \text{ von 0,1 bis 1,5}$$

vorzugsweise 0,2 bis 0,5 und

$$B = \frac{\text{Durchsatz}}{\text{Wärmeübertragungsfläche}} \quad \frac{\text{kg}}{\text{h . m}^2} \text{ von 100 bis 400,}$$

vorzugsweise von 150 bis 300.

Bei Abweichungen von diesen Verhältnissen erhält man Harze die nicht die gewünschten optimalen Eigenschaften 1. bis 4. aufweisen. Wählt man bei konstantem A, also bei konstanter Strömungsgeschwindigkeit, B zu klein, so erhält man ein Harz, das zwar einen hohen Bor-Gehalt besitzt, doch durch die thermische Belastung während der Eindampfung einen zu hohen Vernetzungsgrad aufweist.

Wählt man bei konstantem A den Wert für B zu groß, so ist die Ausdampfung nicht vollständig und der Bor-Gehalt des Harzes zu niedrig, so daß das Produkt im wesentlichen dem einer unvollständigen Kesseleindampfung entspricht.

Die Ausdampfung kann auch unter Zugabe von Zusatzgas, wie beispielsweise Stickstoff oder Kohlendioxid in das Schlangenrohr ablaufen. Dies ist aber nur dann notwendig, wenn eine Überhitzung der Lösung aus Gründen der Produktstabilität vor dem Schlangenrohr vermieden werden soll. Ist eine Überhitzung möglich, so benötigt man kein Zusatzgas, da die Anfangsgeschwindigkeit hoch genug ist, um die Grenzen für die zulässige mittlere Verweilzeit einzuhalten. Wesentlich hierfür ist der Aufbau eines möglichst gleichmäßig Druckgefälles über die gesamte Rohrlänge. Bei Drücken von 5 bis 500 mbar, vorzugsweise bei 50 bis 350 mbar, ist ein Arbeiten ohne Inertgas möglich. Die gebräuchlichen Aufarbeitungstemperaturen während der Aufarbeitung des Harzes im Schlangenrohrverdampfer betragen 140—240°C, vorzugsweise jedoch 170—215; die mittleren Verweilzeiten betragen 5—120 sec, vorzugsweise jedoch 10—40 sec. Die Geschwindigkeit der aus Lösungsmitteldampf und dem Dampf der während der Aufarbeitung durch Einesterung der Borsäurealkylester entstehenden Monomere gebildeten Gase beträgt hierbei 30—200 m/sec; — in Extremfällen am Verdampferaustritt erreicht sie Schallgeschwindigkeit.

Dieser Dampf dient gleichzeitig als Treibdampf für die Harzschmelze und ermöglicht so den raschen Transport des flüssigen Harzes durch das gewendelte Verdampfungs- und Reaktionsrohr (Schlangenrohr) in der dem erfindungsgemäßen Verfahren eigenen spezifisch geringen und durch die Apparateabmessungen bestimmten Verweilzeiten.

Die thermische Belastung des reaktiven Harzes wird während der Aufarbeitung aufgrund der kurzen Verweilzeiten im Schlangenrohr so niedrig gehalten, daß unerwünschte Vernetzungsreaktionen nicht oder nur in untergeordnetem Maße ablaufen, man ein lösungsmittelfreies jedoch aufgrund der trifunktionellen Borsäurealkyl-Novolakestergruppen hochreaktives Verstärkerharz erhält.

Vorzugsweise werden 65—90 Gew.-%ige Lösungen der borhaltigen Phenol-Formaldehydharze dem erfindungsgemäßen Isolierverfahren unterzogen.

Im Destillat werden bei Eindampfung des Harzes im Reaktionskessel oder in einer Schnecke zwischen 12 bis 20 Gew.% der eingesetzten Borsäureesterverbindungen wieder zurückgewonnen. Durch die im Schlangenrohr mögliche kurzzeitige aber relativ hohe Temperaturbelastung kommt es zu einer besseren Umsetzung der zugesetzten Borsäureesterkomponenten mit dem Novolak, so daß im anfallenden Destillat nur 6—10 Gew.-% der eingesetzten Borsäureester wiedergefunden werden und die so erhaltenen Verstärkerharze eine optimale Härtewirksamkeit in den damit gehärteten Kautschukmaterialien entfalten.

Vorteilhaft ist die erfindungsgemäße Aufarbeitungsmethode zusätzlich bezüglich der einfachen Regulierbarkeit der Produkteigenschaften mittels des eingestellten Vakuums. Da durch das eingestellte Vakuum bei einer konstanten Temperatur und konstantem Durchsatz die anfallende Dampfmenge, deren Geschwindigkeit und damit die Fördergeschwindigkeit des flüssigen Harzes bestimmt wird, wird so auch bei bestimmten konstanten Apparatedimensionen die Verweilzeit des harzes innerhalb des Verdampfers reguliert.

Somit können die Produkteigenschaften des harzes signifikant bestimmt und leicht optimierend reguliert werden durch einfache Variation des bei der Aufarbeitung verwendeten Druckes. Dies ist durch keine der vorgenannten Aufarbeitungsmethoden innerhalb eines genügend kleinen Verweilzeitspektrums möglich.

Die erfindungsgemäße Aufarbeitungsmethode mittels eines Schlangenrohrverdampfers der o.g. Apparatekonstanten gestattet es, die als Verstärkerharze für Kautschuke wirksamen borsäureestermodifizierten hochreaktiven Phenol-formaldehydharze hoher Härtewirksamkeit wirtschaftlich bei hohen Mengendurchsätzen aus ihren Lösungen zu isolieren.

Beschreibung einer verwendbaren Apparatur zur Isolierung der harze aus ihren Lösungen:

In der beiliegenden Zeichnung ist die Apparatur prinzipiell dargestellt. Aus der mit 80—120°C, vorzugsweise 80—100°C, beheizten Vorlage (1) wird die ca. 75 Gew.-%ige — hier isobutanolische — Harzlösung über die Pumpe (2) dem gewendelten Rekations- und Verdampfungs-rohr (3) zugeführt. Nach der Pumpe bzw. vor dem Schlangenrohrverdampfer beträgt die Temperatur der Harzlösung 170—220°C, vorzugsweise 190—210°C, und der Druck wird am Schlangenrohrende auf 50—500 mbar, vorzugsweise 100—300 mbar eingestellt. Die eingedampfte Harzschmelze aus dem Zyklon (4) wird über die Pumpe (5) einer Kühlung und anschließend einer geeigneten Konfektionierungsapparatur wie einer Kühlwalze oder einem Pastellierband zugeführt, während die Lösungsmitteldämpfe in einem Kondensator (6) abgeschieden werden. Das Kondensat wird durch Leitung (7) abgeführt. Die Pumpe (8) erzeugt das Vakuum.

Die vom Durchsatz abhängigen und zur Erzielung von Verstärkerharzen geeigneter optimaler Qualität notwendigen Dimensionen des Schlangenrohres, womit das erfindungsgemäße Verfahren der Harzisolierung durchgeführt werden kann, sind in der folgenden Tabelle beispielhaft aufgeführt:

| Durchsatz kg/h (75 Gew.-%ige Harzlösung) | A $\left[\frac{kg}{h \cdot mm^2}\right]$ | B $\left[\frac{kg}{h \cdot m^2}\right]$ |
|---|---|---|
| 40 | 0,226 | 190 |
| 100 | 0,25 | 200 |
| 1000 | 0,333 | 222 |
| 1330 | 0,333 | 240 |

Die den folgenden Beispielen zugrunde liegende Harzlösung wurde gemäß DE—OS 2 557 613 in folgender Weise erhalten:

In die Reaktion eingesetzt wird das bei der Bisphenol-A-Herstellung anfallende "Primärharz", ein Mehrkernphenolgemisch aus Bisphenol-A-Isomeren mit Hydroxyphenyl-hydroxyindan- und Hydroxyphenyl-hydroxychroman-Isomeren im Gewichtsverhältnis von ca. 7:1:1.

890 kg "Primärharz" werden in 200 kg Isobutanol gelöst und mit 35 kg 85 Gew.-%iger Phosphorsäure sowie 2 kg p-Toluolsulfonsäure bei 80°C auf pH=2 eingestellt. Man filtriert über eine Drucknutsche und dosiert gleichzeitig 220 kg 30 Gew.-%iges Formalin sowie 97 kg der ungesättigten Fettsäure "Edenor UKD" (Fa. Henkel, Düsseldorf/Deutschland) zu, wobei unter Stickstoffatmosphäre und Rühren zum Sieden erhitzt wird (Innentemperatur: 97°C). Nach 1-stündiger Reaktion werden azeotrop 190 kg Wasser abdestilliert, wobei die Innentemperatur auf 127°C ansteigt.

In das Reaktionsgemisch werden 300 kg eines separat hergestellten flüssigen Borsäureisobutylesteranhydrids der Zusammensetzung

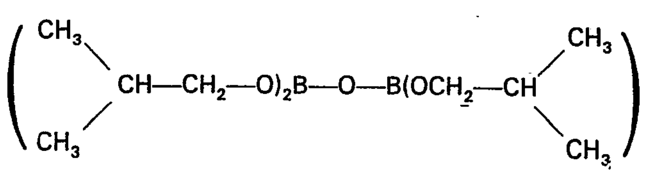 eingetragen,

anschließend 80 kg Isobutanol sowie 10 kg Wasser abdestilliert, wobei die Innentemperatur des Reaktionsgemisches auf 147°C ansteigt. Der Feststoffgehalt der aufarbeitungsfertigen Harzlösung beträgt ca. 75 Gew.-%.

Beispiel 1 (Vergleichsversuch)

Aufarbeitung der Verstärkerharzlösung durch Eindampfen im Kessel:

150 kg der Harzlösung wurden bei bis auf 150°C ansteigender Temperatur erst bei Normaldruck und anschließend unter vermindertem Druck (bis 400 mbar) unter Rühren eingeengt (man erhält 28 kg Destillat). Das flüssige Harz wurde abgelassen.

Borgehalt des Destillats: 1,9%
Ep. des Harzes (nach DIN 53180): 63°C
Borgehalt des Harzes: 1,6%

Das Harz sinterte beim Mahlen zusammen. Wählt man Eindampftemperaturen >150°C und <180°C, so erhält man nach Abdestillation von 37 kg Lösungsmittel vernetzte, unschmelzbare Harze.

Beispiel 2 (Vergleichsversuch)

Aufarbeitung der Verstärkerharzlösung durch Eindampfen in einer Schnecke:

100 kg der Harzlösung wurden in einer 2-Wellen-Ausdampfschnecke bei bis auf 155°C ansteigender Temperatur und ca. 50 mbar eingedampft. Destillatmenge: 24 kg. Das resultierende Harz war teilvernetzt und konnte auf Einmischwalzen nicht homogen in den Kautschuk eingemischt werden.

Wählt man Aufarbeitungstemperaturen von maximal 130°C und einen Druck von 46 mbar, so erhält man ein Harz mit folgenden Kenndaten:

Ep. (DIN 53180): 61°C
Borgehalt des Harzes: 1,6—1,7%
Borgehalt des Destillats: 1,6%
(Destillatmenge: 20 kg/100 kg Harzlösung)

Beispiel 3

Aufarbeitung der Verstärkerharzlösung durch Eindampfen im Schlangenrohrverdampfer mit A=0,226, B=190; 500 kg der Harzlösung wurden in einem Schlangenrohrverdampfer mit Rohrlänge L = 4,5 m und Querschnitt Q = 176 $mm^2$ bei einem Durchsatz von 40 kg Lösung/Std. sowie bei einer Temperatur von 190°C und einem Druck von 200 mbar aufgearbeitet.

Destillat: 122 kg
Borgehalt des Destillats: 0,7%

Das erhaltene Harz besaß folgende Kenndaten:
Ep. (DIN 53180): 74°C
Borgehalt: 1,8—2,0%

## Patentansprüche

1. Verfahren zur Isolierung von borhaltigen Phenol-Formaldehydharzen aus ihren Reaktionsmedien, welche neben dem Endprodukt noch eingesetzte Ausgangsverbindungen sowie Lösungsmittel enthalten, dadurch gekennzeichnet, daß die Isolierung durch Eindampfung in einem gewendelten Verdampfungsrohr erfolgt, das folgende Kenndaten aufweist:

$$A = \frac{\text{Durchsatz}}{\text{Rohrquerschnitt}} \; \frac{\text{kg}}{\text{h . mm}^2} \text{ von 0,1 bis 1,5}$$

$$B = \frac{\text{Durchsatz}}{\text{Wärmeübertragungsfläche}} \; \frac{\text{kg}}{\text{h . m}^2} \text{ von 100 bis 400.}$$

2. Verfahren nach Anspruch 1, dadurch gekennzeichnet, daß die Kenndaten des Verdampfungsrohrs

A von 0,2 bis 0,5 und
B von 150 bis 300

betragen.

3. Verfahren gemäß Anspruch 1 und 2, dadurch gekennzeichnet, daß das Isolierverfahren bei Temperaturen von 140° bis 240°C durchgeführt wird.

4. Verfahren gemäß Ansprüchen 1—3, dadurch gekennzeichnet, daß das Isolierverfahren bei Temperaturen von 170°C bis 215°C durchgeführt wird.

5. Verfahren gemäß Ansprüchen 1—4, dadurch gekennzeichnet, daß die mittlere Verweilzeit des Harzes in dem gewendelten Verdampfungsrohr 5—120 sec. beträgt.

6. Verfahren gemäß Ansprüchen 1—5, dadurch gekennzeichnet, daß die mittlere Verweilzeit des Harzes in dem gewendelten Verdampfungsrohr 10—40 sec beträgt.

7. Verfahren gemäß Ansprüchen 1—6, dadurch gekennzeichnet, daß die Verdampfung unter Einsatz von Inertgas erfolgt.

8. Verfahren gemäß Ansprüchen 1—7, dadurch gekennzeichnet, daß das gewendelte Verdampfungsrohr unter einem Druckgefälle von 5 bis 500 mbar steht.

9. Verfahren gemäß Anspruch 1—8, dadurch gekennzeichnet, daß das gewendelte Verdampfungsrohr unter einem Druckgefälle von 50 bis 350 mbar steht.

**Claims**

1. A process for isolating boron-containing phenol/formaldehyde resins from their reaction media which, in addition to the end product, also contain starting compounds and solvents used, characterised in that isolation is carried out by concentration through evaporation in a spiral flow evaporator which has the following characteristics:

$$A = \frac{\text{throughput}}{\text{tube cross section}} \quad \frac{\text{kg}}{\text{h . mm}^2} = \text{from 0.1 to 1.5 and}$$

$$B = \frac{\text{throughput}}{\text{heat transfer surface}} \quad \frac{\text{kg}}{\text{h . m}^2} = \text{from 100 to 400.}$$

2. A process according to Claim 1, characterised in that the characteristics of the spiral flow evaporator are as follows:

A = from 0.2 to 0.5 and
B = from 150 to 300.

3. A process according to Claim 1 and 2, characterised in that the isolation process is carried out at temperatures in the range of from 140 to 240°C.

4. A process according to Claims 1 to 3, characterised in that the isolation process is carried out at temperatures in the range of from 170 to 215°C.

5. A process according to Claims 1 to 4, characterised in that the mean residence time of the resin in the spiral flow evaporator amounts to from 5 to 120 seconds.

6. A process according to Claims 1 to 5, characterised in that the mean residence time of the resin in the spiral flow evaporator amounts to from 10 to 40 seconds.

7. A process according to Claims 1 to 6, characterised in that evaporation is carried out in the presence of an inert gas.

8. A process according to Claims 1 to 7, characterised in that the spiral flow evaporator is under a pressure gradient of from 5 to 500 mbars.

9. A process according to Claims 1 to 8, characterised in that the spiral flow evaporator is under a pressure gradient of from 50 to 350 mbars.

**Revendications**

1. Procédé pour isoler des résines phénol-formaldéhyde contenant du bore de leurs milieux de réaction contenant encore, en plus du produit final, des composés de départ mis en oeuvre et un solvant, ce procédé se caractérisant en ce que l'isolement est effectué par évaporation dans un tube d'évaporation en hélice présentant les caractéristiques suivantes:

$$A = \frac{\text{débit}}{\text{section du tube}} \quad \frac{\text{kg}}{\text{h . mm}^2} \text{ de 0,1 à 1,5}$$

$$B = \frac{\text{débit}}{\text{surface de transfert de la chaleur}} \quad \frac{\text{kg}}{\text{h . m}^2} \text{ de 100 à 400.}$$

2. Procédé selon la revendication 1, caractérisé en ce que les caractéristiques du tube d'évaporation sont:

A 0,2 à 0,5 et
B 150 à 300.

3. Procédé selon les revendications 1 et 2, caractérisé en ce que l'opération d'isolement est effectuée à des températures de 140 à 240°C.

4. Procédé selon les revendications 1 à 3, caractérisé en ce que l'opération d'isolement est effectuée à des températures de 170 à 215°C.

5. Procédé selon les revendications 1 à 4, caractérisé en ce que la durée de passage moyenne de la résine dans le tube d'évaporation en hélice est de 5 à 120 s.

6. Procédé selon les revendications 1 à 5, caractérisé en ce que la durée de passage moyenne de la résine dans le tube d'évaporation en hélice est de 10 à 40 s.

7. Procédé selon les revendications 1 à 6, caractérisé en ce que l'évaporation est effectuée avec adjonction de gaz inertes.

8. Procédé selon les revendications 1 à 7, caractérisé en ce que le tube d'évaporation en hélice se trouve sous une chute de pression de 5 à 500 mbar.

9. Procédé selon les revendications 1 à 8, caractérisé en ce que le tube d'évaporation en hélice se trouve sous une chute de pression de 50 à 350 mbar.

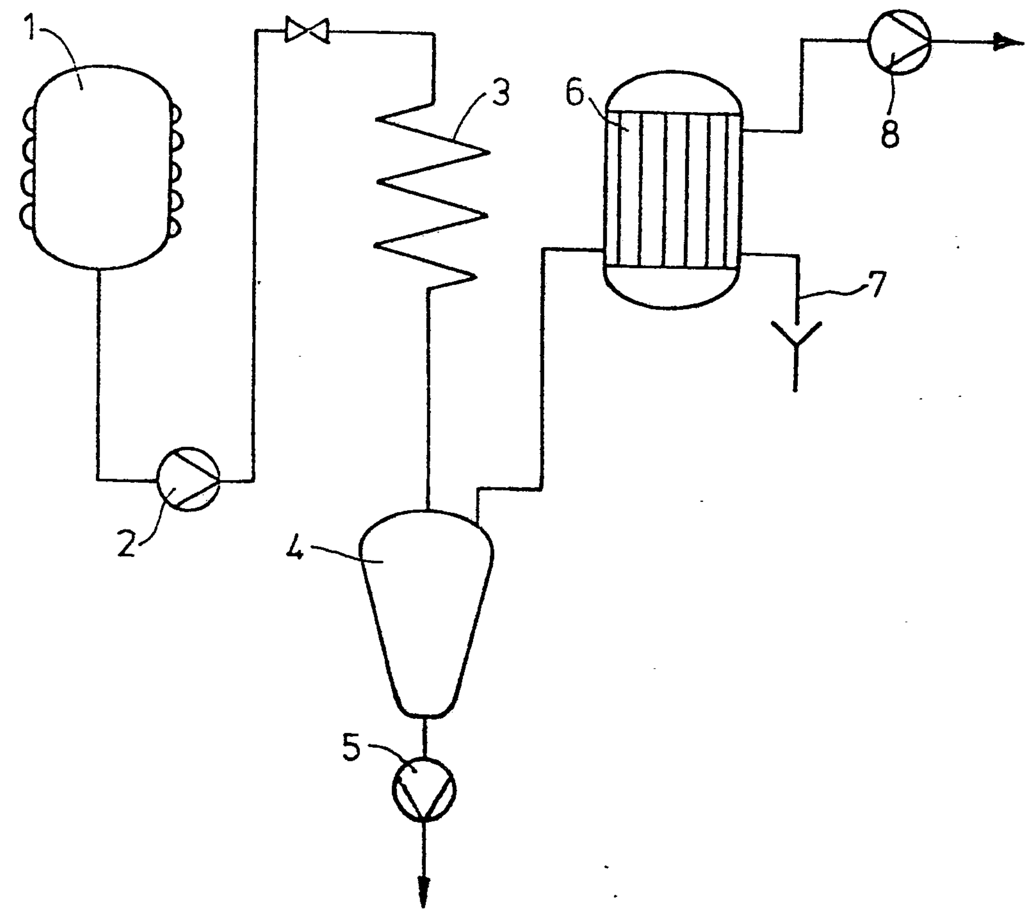
1
2
3
4
5
6
7
8